# EUROPEAN PATENT APPLICATION

(11) **EP 4 818 001 A1**
(43) Date of publication of application: **07.10.2026**
(21) Application number: 26167516.9
(22) Date of filing: 25.03.2026
(51) Int. Cl.: B62D 15/02, G08G 1/16

(54) **PARKING ASSISTANCE DEVICE**

(30) Priority: 31.03.2025 JP 2025058093
(71) Applicant: AISIN CORPORATION, Kariya, Aichi 448-8650 (JP)
(72) Inventor: FURUKAWA, Masaki, Kariya, Aichi, 448-8650 (JP); KATO, Ryutaro, Kariya-shi, Aichi-ken, 444-0027 (JP); IMASATO, Anna, Kariya-shi, Aichi-ken, 444-0027 (JP)
(74) Representative: TBK

(57) **Abstract**

A parking assistance device (1) displays, on a display device, a captured image obtained by an imaging device included in a vehicle (2) imaging surroundings of the vehicle (2), and, when a parking slot (51) that is a candidate for a parking target position where the vehicle (2) is parked is detected, displays a target parking space image indicating that the slot (51) in the captured image is a candidate for the parking target position. A process of displaying the target parking space image includes detecting, when the slot (51) is on a side of a passage (50) through which the vehicle (2) travels, an angle of a boundary between the slot (51) and the passage (50), determining an angle at which the target parking space image displayed for the slot (51) is displayed based on the detected angle, and displaying the target parking space image at the determined angle.

## Description

### TECHNICAL FIELD

The present disclosure relates to a parking assistance device that assists the parking of a vehicle.

### BACKGROUND DISCUSSION

In the related art, there has been proposed a parking assistance device that provides parking assistance by displaying a camera image obtained by capturing an image of a surrounding environment of a vehicle when the vehicle is parked, giving a warning against a person or an obstacle located in the surroundings, or causing the vehicle to execute part or all of a driving operation by a user.

Here, in order to perform the parking assistance as described above, it is necessary to cause the user to grasp a parking target position to park the vehicle. Therefore, for example, JP 2021-94934 A proposes a technique in which while a captured image captured by a vehicle exterior camera is converted into an overhead image or a bird's-eye view image and then displayed on a display device, positions of a division line and an obstacle around the vehicle are detected by an external environment sensor included in the vehicle, and in a case where a parking space in which the vehicle can be parked is detected, an image of a target parking space formed of a rectangle is displayed, in a superimposed manner, on the position of the detected parking space in the overhead image or the bird's-eye view image, thereby allowing the user to grasp the parking target position.

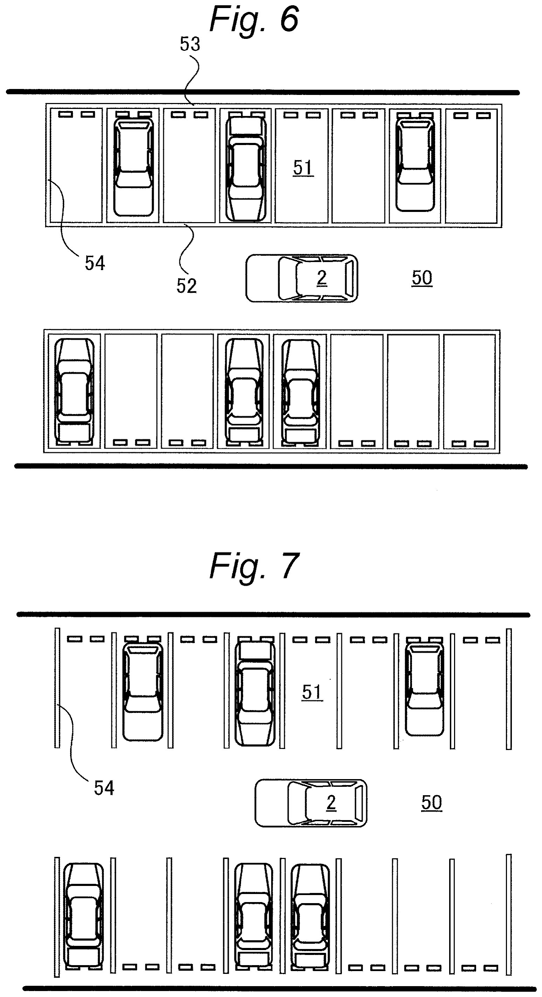

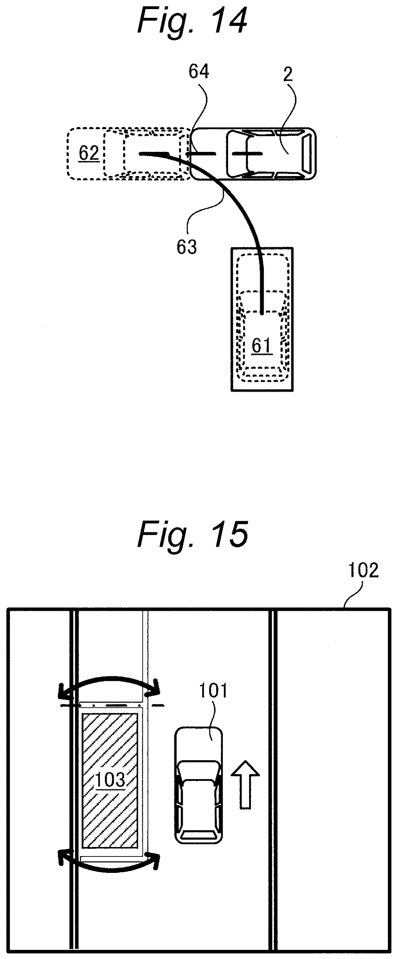

Here, in JP 2021-94934 A (paragraphs 0052 to 0056 and Fig. 7), a parking space in which a vehicle can be parked is detected by detecting positions of a division line and an obstacle by an external environment sensor, and an image of a target parking space is displayed based on the detected parking space, but since it is difficult to detect the division line by a distance measuring sensor such as an ultrasonic sensor, the division line is basically detected by a captured image captured by a camera. However, on the captured image captured by the camera, due to the nature of the lens, the degree of distortion of the division line changes and increases as the distance from the host vehicle increases. Furthermore, since an external environment such as unevenness of a road surface on which the host vehicle travels affects the recognition of the division line, the position may be recognized in an irregularly changing manner, in addition to distortion. Then, when the division line is recognized distortedly and the position is recognized in an irregularly changing manner, the parking space identified by the division line is similarly distorted or changed in position, and the display of the image of the target parking space displayed based on the parking space is unstable. As a result, for example, Fig. 15 is a diagram illustrating an overhead image 102 generated based on the captured image captured by a vehicle 101 and an image 103 of the target parking space superimposed on the overhead image 102. There is a problem that the angle of the image 103 of the target parking space disposed in the same parking space changes as the vehicle 101 travels. Such a change gives a sense of discomfort to the user who views the overhead image 102.

A need thus exists for a parking assistance device that allows a user to visually recognize a target parking space image displayed on a captured image in a superimposed manner without a sense of discomfort.

### SUMMARY

In order to achieve the object, a parking assistance device according to the present disclosure is a parking assistance device that displays, on a display device, a captured image obtained by an imaging device included in a vehicle imaging surroundings of the vehicle, and, in a case where a parking slot that is a candidate for a parking target position where the vehicle is parked is detected, displays a target parking space image indicating that the parking slot in the captured image is a candidate for the parking target position, wherein a process of displaying the target parking space image includes detecting, in a case where the parking slot for which the target parking space image is displayed is located on a side of a passage through which the vehicle travels, an angle of a boundary between the parking slot and the passage, determining an angle at which the target parking space image displayed for the parking slot is displayed based on the detected angle of the boundary, and displaying the target parking space image at the determined angle.

Note that the "captured image obtained by an imaging device imaging surroundings of the vehicle" is an image of a real view obtained by capturing an image of the surroundings of the vehicle by the imaging device such as a camera, and may be a captured image itself or an image obtained by processing or converting the captured image. For example, the captured image may be an image obtained by combining images captured by a plurality of cameras, or may be an overhead image or a bird's-eye view image obtained by viewpoint transformation.

According to the parking assistance device having the above configuration according to the present disclosure, in a case where the target parking space image indicating that the parking slot is a candidate for the parking target position is displayed on the captured image in a superimposed manner, the angle of the displayed target parking space image is determined based on the angle of the boundary between the parking slot and the passage, so that it is possible to allow the user to visually recognize the target parking space image without a sense of discomfort.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to the present embodiment;
Fig. 2 is a block diagram illustrating a configuration of a parking assistance device according to the present embodiment;
Fig. 3 is a flowchart of a parking assistance processing program according to the present embodiment;
Fig. 4 is a diagram illustrating a method of converting a captured image into an overhead image;
Fig. 5 is a diagram illustrating a method of generating an overhead image;
Fig. 6 is a diagram illustrating an arrangement example of a division line and a parking slot of a parking lot in which parallel parking is performed;
Fig. 7 is a diagram illustrating an arrangement example of a division line and a parking slot of a parking lot in which parallel parking is performed;
Fig. 8 is a diagram illustrating an arrangement example of a division line and a parking slot of a parking lot in which in-line parking is performed;
Fig. 9 is a diagram describing a method of calculating an angle of a boundary between a parking slot and a passage from a front end line;
Fig. 10 is a diagram describing a method of calculating an angle of a boundary between a parking slot and a passage from a front end point;
Fig. 11 is an example of a display screen displayed on a liquid crystal display during parking assistance;
Fig. 12 is a diagram illustrating a method of adjusting an angle and a front-rear position of a target parking space image;
Fig. 13 is a diagram illustrating position adjustment in the front-rear direction of the target parking space image;
Fig. 14 is a diagram illustrating a method of calculating a parking trajectory; and
Fig. 15 is a diagram illustrating problems of the technique in the related art.

### DETAILED DESCRIPTION

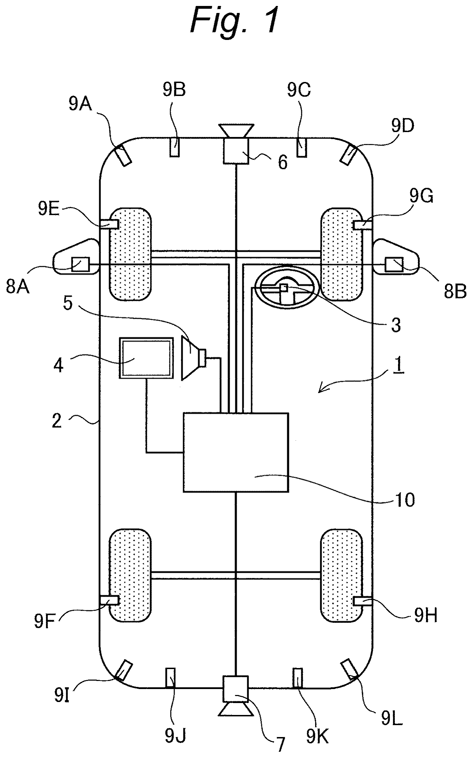

Hereinafter, a parking assistance device according to an embodiment of the present disclosure will be described in detail with reference to the drawings. First, a vehicle 2 on which a parking assistance device 1 according to the present embodiment is mounted will be described below. Fig. 1 is a schematic configuration diagram of a vehicle 2 according to the present embodiment.

Here, the vehicle 2 may be, for example, an automobile (internal combustion engine automobile) using an internal combustion engine (engine or the like) as a driving source, an automobile (electric vehicle, fuel cell vehicle, etc.) using an electric motor (motor or the like) as a driving source, or an automobile (hybrid automobile) using both of them as driving sources. In addition, the type of vehicle does not matter, and the vehicle may be a normal vehicle, or may be a commercial large truck, a bus, a construction machine, or the like. In the following description, a four-wheel vehicle is described, but a two-wheel or three-wheel vehicle may be described.

However, in addition to the manual driving travel in which the vehicle 2 travels based on the driving operation by the user, the vehicle 2 is assumed to be a vehicle that can perform the assistance travel by the automatic driving assistance in which the vehicle automatically travels regardless of the driving operation by the user.

Further, the automatic driving assistance may be performed only under a specific situation such as at the time of parking or at the time of exiting the parking slot, may be performed for all road sections, or may be performed only while the vehicle travels in a specific road section (for example, an expressway in which a gate (it does not matter whether the gate is manned or unmanned, or whether the expressway is a toll road or toll-free) is provided at a boundary). In the present embodiment, assistance travel by automatic driving assistance is performed at least for travel to a parking space when the vehicle is parked (that is, parking assistance).

Then, in the vehicle control in the automatic driving assistance of the present embodiment, for example, the current position of the vehicle, the lane on which the vehicle travels, and the position of the surrounding obstacle are detected as needed, and the vehicle control such as the steering, the driving source, and the brake is automatically performed so that the vehicle travels along the generated traveling trajectory at the speed according to the similarly generated speed plan. Specifically, in a case where parking assistance is performed, a candidate designated by the user from among candidates for the parking target position displayed on an in-vehicle display is set as the current parking target position as described later. Then, vehicle control of calculating a parking trajectory to the set parking target position, causing the vehicle to move to the parking target position along the calculated parking trajectory, and completing parking is automatically performed. However, only the steering operation may be automatically performed, and the driving source and the brake may be controlled based on the manual operation. Alternatively, only the instruction of the parking operation may be performed, and the parking operation may be manually performed by the user. Furthermore, when the parking assistance is performed, a landscape (real view) around the vehicle is displayed on an in-vehicle display, and a parking target position and an obstacle (for example, a parked vehicle) around the parking target position are displayed.

As illustrated in Fig. 1, the vehicle 2 includes an operation unit 3 that receives an operation from an occupant, a liquid crystal display 4 that displays a bird's-eye view image or an overhead image of the surroundings of the vehicle and other information related to driving assistance to the occupant, a speaker 5 that outputs audio guidance related to driving assistance, a front camera 6, a rear camera 7, and side cameras 8A and 8B for imaging the surroundings of the vehicle, ultrasonic sensors 9A to 9L that detect obstacles around the vehicle, and a driving assistance electronic control unit (ECU) 10 that performs various types of arithmetic processing based on input information. The parking assistance device 1 includes the driving assistance ECU 10.

Hereinafter, each component included in the vehicle 2 will be described. First, the operation unit 3 is disposed, for example, on a front face of a steering wheel, and includes an operation button or the like to be operated when automatic driving assistance is started. By operating the operation unit 3, the user can switch between the manual driving travel in which the vehicle travels based on the driving operation by the user and the assistance travel by the automatic driving assistance in which the vehicle automatically travels regardless of the driving operation by the user. Specifically, in the present embodiment, a touch panel provided on the front face of the liquid crystal display 4 is provided as the operation unit 3. The user operates the touch panel to designate the parking target position at the time of parking assistance as described later. Furthermore, the operation unit 3 may include a microphone and a voice recognition device.

The liquid crystal display 4 is a type of display device, is provided on an instrument panel of the vehicle 2, and displays an overhead image or a bird's-eye view image of the surroundings of the vehicle generated by performing a viewpoint conversion and a synthesis process on captured images captured by the respective cameras of the front camera 6, the rear camera 7, and the side cameras 8A and 8B as a vehicle surrounding image indicating the surroundings of the vehicle during execution of automatic driving assistance. However, instead of the image of the real view, a virtual image in which the surroundings of the vehicle are reproduced by CG may be displayed. In addition, when parking assistance is started, a target parking space image indicating a candidate for a parking target position is displayed on the vehicle surrounding image in a superimposed manner. Note that the liquid crystal display 4 may be used for a navigation device.

In addition, the speaker 5 is provided at an instrument panel of the vehicle 2, and outputs a guide voice, a warning sound, and the like related to driving assistance. Note that the speaker 5 may be used for a navigation device.

The front camera 6 is an imaging device including a camera including a solid-state imaging element such as a CCD, for example, and is installed, for example, above a front bumper of the vehicle 2 or on a back side of a room mirror with an optical axis direction facing forward in a traveling direction of the vehicle.

The rear camera 7 is an imaging device that includes a camera including a solid-state imaging element such as a CCD, and is attached, for example, to the vicinity of the upper center of a license plate attached to the rear of the vehicle 2, and is installed with an optical axis direction facing the rear of the vehicle.

Further, the side cameras 8A and 8B are imaging devices each including a camera including a solid-state imaging element such as a CCD, and are attached, for example, to left and right side mirrors of the vehicle 2, and are installed with an optical axis direction facing a side of the vehicle.

Then, the driving assistance ECU 10 generates an overhead image and a bird's-eye view image of the surroundings of the vehicle by performing a viewpoint conversion and a synthesis process on the captured images captured by the respective cameras of the front camera 6, the rear camera 7, and the side cameras 8A and 8B (hereinafter also collectively referred to as a camera). In addition, during execution of automatic driving assistance, an image recognition process is performed on the captured image to detect a division line, a parking space line, and an obstacle (other vehicles, pedestrians, bicycles, walls, guard rails, and other structures) around the vehicle, and automatic driving assistance is executed based on a detection result. Specifically, in a case where parking assistance is performed, a parking slot which is a candidate for a parking target position is detected using a detection result of a division line (including a parking space line) by the camera.

On the other hand, the ultrasonic sensors 9A to 9L are disposed at predetermined intervals at the front, rear, and side portions of the vehicle, respectively, transmit ultrasonic waves as probing waves to the surroundings of the vehicle 2, and receive reflected waves of the transmitted probing waves reflected by an object around the vehicle, thereby detecting the object reflecting the probing waves. Specifically, it is a type of distance measuring sensor capable of detecting the distance (distance measurement value) to the object reflecting the probing wave by measuring the time from transmission to reception. In addition, the ultrasonic sensors 9A to 9L are configured to be capable of generating an output signal (including the distance to the detected object) corresponding to the reception result of the received wave and outputting the output signal to the control unit. Examples of the object to be detected by the ultrasonic sensors 9A to 9L include obstacles, such as a person, a bicycle, another vehicle, and a wall, that need to be avoided when the vehicle 2 travels. The distance measuring sensor may include a millimeter wave sensor or a laser sensor instead of the ultrasonic sensor. In addition, in the present embodiment, a parking slot which is a candidate for a parking target position is basically detected using a camera as described later, but can also be detected using the ultrasonic sensors 9A to 9L. Although it is difficult for the ultrasonic sensors 9A to 9L to detect a division line drawn on a road surface, the ultrasonic sensors 9A to 9L can detect, for example, a space surrounded by a wall or another vehicle as a parking slot that is a candidate for a parking target position.

In addition, the installation position and the installation direction of each of the ultrasonic sensors 9A to 9L can be set as appropriate. In the present embodiment, in order to set all directions of the front, rear, left, and right sides of the vehicle 2 in the traveling direction as the detection range of the object, for example, the ultrasonic sensors 9A to 9D are installed on the front face of the vehicle 2 toward the traveling direction so that the probing wave is transmitted ahead of the vehicle in the traveling direction. The ultrasonic sensors 9E and 9F are installed leftward on the left side face of the vehicle 2 so that the probing wave is transmitted left of the vehicle in the traveling direction. In addition, the ultrasonic sensors 9G and 9H are installed on the right side face of the vehicle 2 toward the right so that the probing wave is transmitted right of the vehicle in the traveling direction. In addition, the ultrasonic sensors 9I to 9L are installed on the rear face of the vehicle 2 in a direction opposite to the traveling direction so that the probing wave is transmitted behind the vehicle. The heights of the ultrasonic sensors 9A to 9L from the ground surface are substantially the same.

In the present embodiment, among the ultrasonic sensors 9A to 9L, in particular, the ultrasonic sensors 9A to 9D on the front face of the vehicle 2 and the ultrasonic sensors 9I to 9L on the rear face of the vehicle 2 are installed at positions where reflected waves can be received as indirect waves between adjacent sensors. Therefore, by receiving a direct wave and an indirect wave as received waves, it is possible to identify a specific position (relative position with respect to the vehicle) of the object using triangulation as well as the distance to the object. Since the side ultrasonic sensors 9E to 9H are installed to be separated from each other, indirect waves cannot be received, but when the vehicle moves, a specific position (relative position with respect to the vehicle) of the object can be identified by triangulation using the distance measurement distance at the previous position, the distance measurement distance at the current position, and the movement distance therebetween.

On the other hand, the driving assistance ECU 10 is an electronic control unit that performs various processes related to automatic driving assistance. The driving assistance ECU 10 is connected to the operation unit 3, the liquid crystal display 4, the speaker 5, the front camera 6, the rear camera 7, the side cameras 8A and 8B, and the ultrasonic sensors 9A to 9L described above via an in-vehicle network such as CAN. In addition, the driving assistance ECU 10 is connected to various sensors such as a GPS, a vehicle speed sensor, an acceleration sensor, a gyro sensor, a steering sensor, and a shift position sensor mounted on the vehicle 2, a navigation device that is an on-vehicle device, and the like. A detailed configuration of the driving assistance ECU 10 will be described later.

Although the vehicle 2 includes basic components as the vehicle 2 in addition to the components illustrated in Fig. 1, only a configuration related to control of automatic driving assistance (particularly parking assistance) and control related to the configuration will be described.

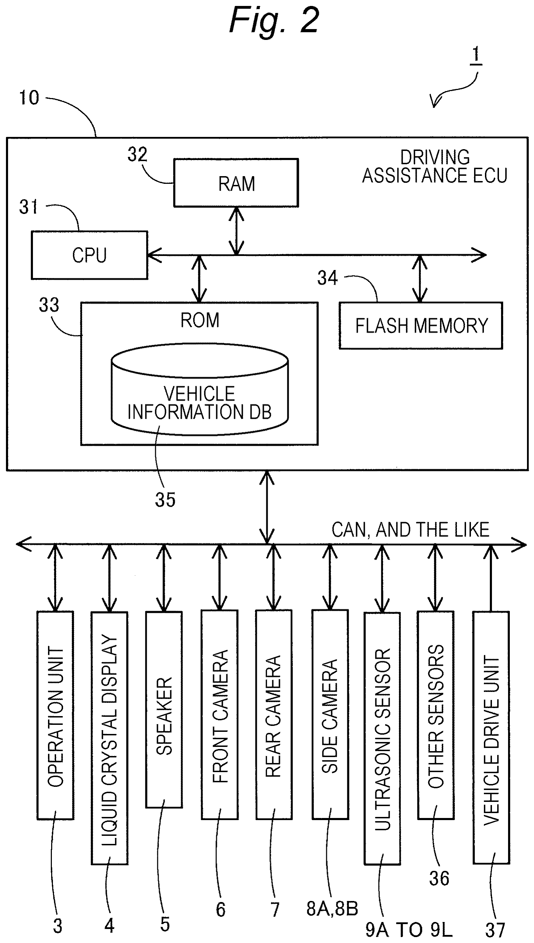

Next, details of the parking assistance device 1 included in the vehicle 2 described above, particularly the driving assistance ECU 10, will be described. Fig. 2 is a block diagram illustrating a configuration of the parking assistance device 1 according to the present embodiment.

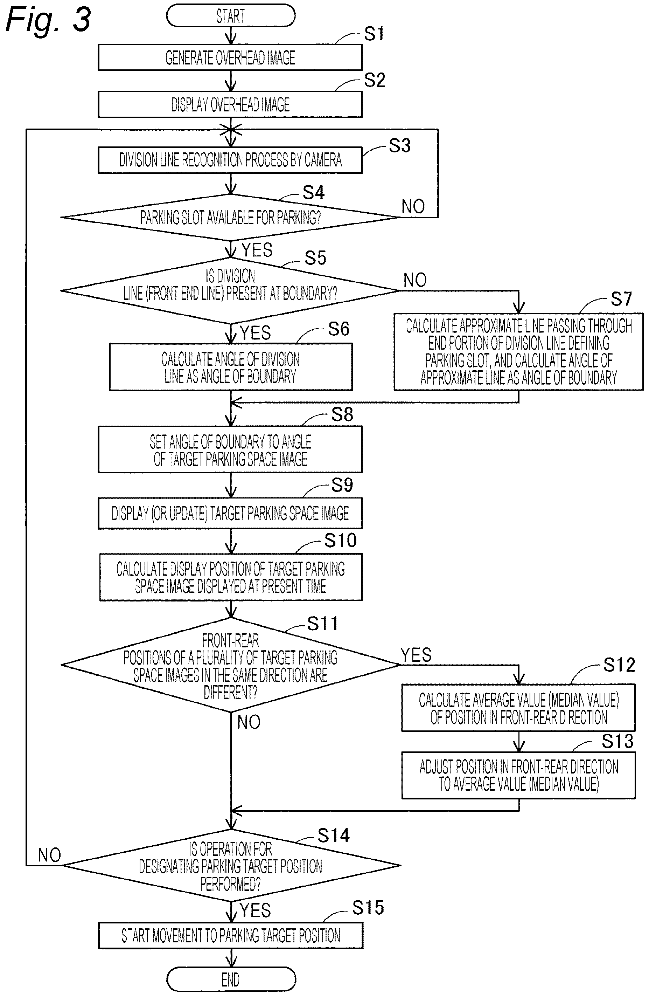

As illustrated in Fig. 2, the driving assistance ECU (electronic control unit) 10 is an electronic control unit that performs overall control of the parking assistance device 1, and includes a CPU 31 as an arithmetic device and a control device, and internal storage devices such as a RAM 32 that is used as a working memory when the CPU 31 performs various arithmetic processing and that stores traveling trajectory data and the like when a traveling trajectory is calculated, a ROM 33 that stores a parking assistance processing program (see Fig. 3) and the like to be described later in addition to a program for control, and a flash memory 34 that stores a program read from the ROM 33. The driving assistance ECU 10 executes various functions as a processing algorithm. For example, the functions include a function of displaying, on the liquid crystal display 4, a captured image obtained by capturing an image of the surroundings of the vehicle by a camera included in the vehicle 2, a function of displaying a target parking space image indicating that a parking slot in the captured image is a candidate for a parking target position in a case where the parking slot that is a candidate for the parking target position where the vehicle 2 is parked is detected, and the like.

In addition, the driving assistance ECU 10 is connected to various sensors 36 for detecting the current position and behavior of the vehicle, such as a GPS, a vehicle speed sensor, an acceleration sensor, a gyro sensor, a steering sensor, and a shift position sensor, and each drive unit 37 of the vehicle, such as a steering, a brake, an accelerator, and a transmission, and performs automatic driving assistance of the vehicle 2 by controlling each drive unit 37 while detecting the current position and the current behavior of the vehicle based on the detection results of these sensors 36. As the specific content of automatic driving assistance, for example, in parking assistance, a current position of a vehicle and a position of a surrounding obstacle are detected as needed, and vehicle control of steering, a driving source, a brake, and the like is performed so that the vehicle travels along a generated parking trajectory. Specifically, in a case where the ultrasonic sensors 9A to 9L detect an obstacle within a predetermined distance from the vehicle during traveling with parking assistance, control is performed to decelerate and stop the vehicle, or avoidance control is performed to avoid the obstacle. However, only the steering operation may be automatically performed, and the driving source and the brake may be controlled based on the manual operation. Alternatively, only the instruction of the parking operation may be performed, and the parking operation may be manually performed by the user.

The ROM 33 includes a vehicle information DB 35, and the vehicle information DB 35 stores various types of information about the vehicle 2. For example, the ROM 33 stores installation positions (height from ground surface, position in horizontal direction) and detection axes (optical axis and angle of view for camera) of the cameras and the ultrasonic sensors 9A to 9L installed in the vehicle 2, a total length, a vehicle width, a wheelbase, a minimum turning radius, and the like. These pieces of information are input in advance by an occupant or a person of the vehicle manufacturer.

Next, a parking assistance processing program executed by the driving assistance ECU 10 in the parking assistance device 1 having the above-described configuration will be described with reference to Fig. 3. Fig. 3 is a flowchart of a parking assistance processing program according to the present embodiment. Here, the parking assistance processing program is a program that is executed after the accessory power supply (ACC) of the vehicle 2 is turned on and a start condition for starting parking assistance is satisfied, and performs parking assistance particularly when the vehicle is parked as one type of automatic driving assistance. Note that the program illustrated in the flowchart in Fig. 3 below is stored in the RAM 32 or the ROM 33 included in the parking assistance device 1, and is executed by the CPU 31.

Note that the start condition for starting parking assistance may include a case where the user selects to start parking assistance by operating the operation unit 3, or may include a case where it is detected that a vehicle has entered a parking lot, a case where it is determined that the vehicle has arrived at a set destination, or a case where it is detected that the vehicle has approached a parking lot.

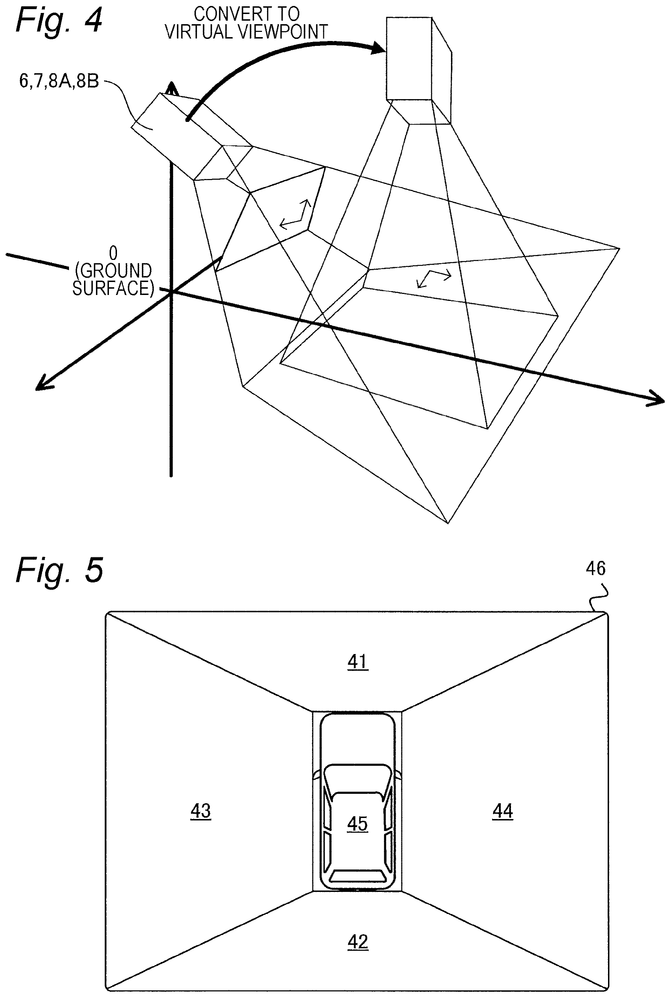

First, in step (hereinafter, abbreviated as S) 1, the CPU 31 generates an overhead image in which the surroundings of the vehicle are looked down on vertically downward from the sky based on real-time captured images captured by the front camera 6, the rear camera 7, and the side cameras 8A and 8B. A method of generating an overhead image will be described below. As illustrated in Fig. 4, a real-time captured image captured by each camera is projected on a virtual projection plane that is a horizontal plane corresponding to the height of the ground surface, and the captured image projected on the virtual projection plane is converted into an image viewed from a virtual viewpoint looking down in a vertical direction from above the vehicle 2, thereby generating an overhead image of each camera. Note that the conversion (viewpoint conversion) into the image viewed from the virtual viewpoint is performed by first converting each coordinate of the captured image coordinate system set along the plane perpendicular to the optical axis of the camera into each coordinate of the ground coordinate system set along the ground surface, and further converting the each converted coordinate into each coordinate of the overhead image coordinate system. Note that the conversion formulae used for each coordinate conversion are already known, and thus description thereof is omitted. Then, as illustrated in Fig. 5, an overhead image 41 obtained by performing viewpoint transformation on the captured image of the front camera 6, an overhead image 42 obtained by performing viewpoint transformation on the captured image of the rear camera 7, an overhead image 43 obtained by performing viewpoint transformation on the captured image of the side camera 8A, and an overhead image 44 obtained by performing viewpoint transformation on the captured image of the side camera 8B are synthesized (connected), and an illustration image 45 schematically showing the host vehicle is inserted between the respective overhead images 41 to 44 to generate an overhead image 46.

Subsequently, in S2, the CPU 31 displays the overhead image 46 created in S1 on the liquid crystal display 4 as a vehicle surrounding image indicating the surroundings of the vehicle.

Note that, in the following description, an example in which the overhead image 46 in which the surroundings of the vehicle are looked down on vertically downward from the sky is displayed as the vehicle surrounding image will be described, but it is possible to display a bird's-eye view image in which the surroundings of the vehicle are looked down on diagonally downward from the sky, instead of the overhead image. Alternatively, the screen may be divided into two screens to display both the overhead image and the bird's-eye view image. In addition, in the bird's-eye view image, the position of the viewpoint can be set to, for example, the inside of the host vehicle, and in this case, a diagram in which the surroundings of the vehicle are visually recognized from the inside of the host vehicle can be displayed as a vehicle surrounding image. Alternatively, a real-time captured image captured by any one of the front camera 6, the rear camera 7, and the side cameras 8A and 8B can be displayed without being processed. Note that even in a case where the bird's-eye view image or the captured image by the camera is displayed as it is instead of the overhead image 46, a target parking space image to be described later is displayed on the image in a superimposed manner.

Note that the generation and display of the overhead image 46 in S1 and S2 described above are repeatedly executed until the parking assistance is terminated, and the overhead image 46 indicating the surroundings of the vehicle in real time is continuously displayed on the liquid crystal display 4.

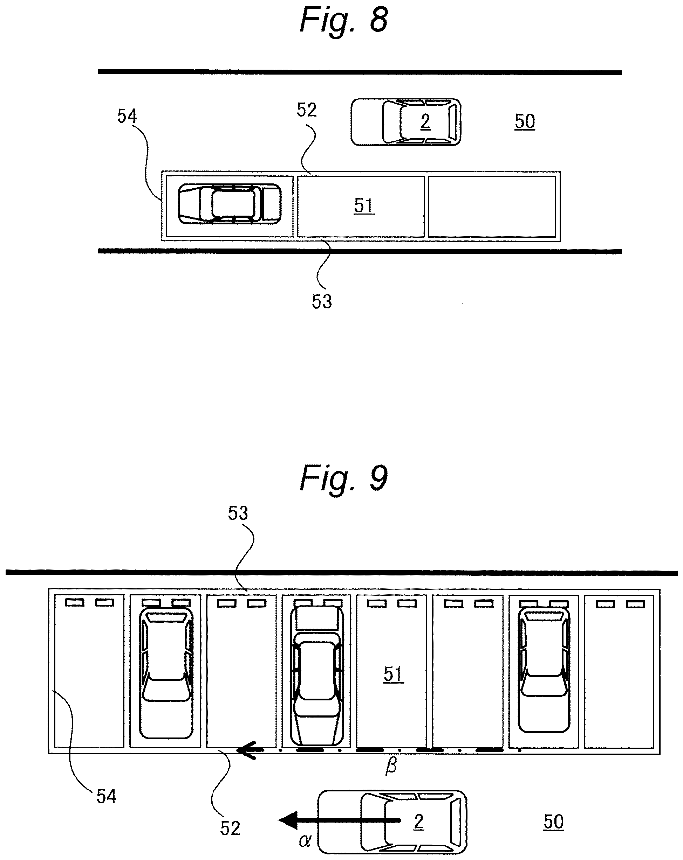

Next, in S3, the CPU 31 detects a division line included in the overhead image 46 by performing an image recognition process on the overhead image 46 generated in S1. Here, the division line to be detected in S3 includes a division line that defines a parking slot in a parking lot. As illustrated in Fig. 6, the division line that defines the parking slot further includes a division line (hereinafter, referred to as a front end line 52) at the boundary between a passage 50 and a parking slot 51, a division line (hereinafter, referred to as a rear end line 53) on the rear end of the parking slot 51, the rear end being opposite to the passage 50, and a division line (hereinafter, referred to as side end line 54) that defines the parking slot 51 in the intersecting direction of the passage 50. Note that In a case where a plurality of parking slots 51 is disposed side by side as illustrated in Fig. 6, the side end line 54 is a division line that defines the parking slots 51 adjacent to each other. However, not all the front end line 52, the rear end line 53, and the side end line 54 are constantly present, and depending on a parking lot, for example, as illustrated in Fig. 7, there is a parking lot in which the front end line 52 and the rear end line 53 are not present and only the side end line 54 is present. Furthermore, there is a parking lot in which only one of the front end line 52 and the rear end line 53 exists. In addition, Figs. 6 and 7 illustrate the parking slot 51 for parallel parking in which parking is performed so that the vehicle is aligned in parallel with another parked vehicle, but as illustrated in Fig. 8, it is possible to similarly detect a division line of the parking slot 51 for in-line parking in which parking is performed so that the vehicle is aligned in the same straight line with another parked vehicle (that is, parallel to a passage). Note that, in the parking slot 51 for parallel parking illustrated in Fig. 6, the front end line 52 and the rear end line 53 are short sides of the parking slot 51, and the side end line 54 is a long side of the parking slot 51. On the other hand, in the parking slot 51 for in-line parking illustrated in Fig. 8, the front end line 52 and the rear end line 53 are long sides of the parking slot 51, and the side end line 54 is a short side of the parking slot 51.

In addition, parallel parking includes oblique parking in which parking is performed in an inclined manner in addition to a case where parking is performed perpendicularly to a passage. For the parking slot 51 in which parking is performed in an inclined manner, the side end line 54 is not perpendicular to the passage 50. In addition, the front end line 52 and the rear end line 53 may not be linearly connected (may be stepwise) to those of the adjacent parking slot.

Hereinafter, the image recognition process in S3 will be described in more detail. In order to detect the division line from the overhead image 46, the CPU 31 performs, for example, luminance correction on the road surface and the division line on the road surface based on a luminance difference and then binarization processing of separating the division line from the image, geometric processing of correcting distortion, smoothing processing of removing noise of the image, and the like. Accordingly, it is possible to detect the boundary line between the road surface and the division line. Note that detection may be performed using known template matching processing, feature point detection processing, or the like. Furthermore, the image recognition process on the captured image is not limited to the above example, but may be performed using, for example, machine learning.

In addition, depending on a parking lot, a parking slot may be defined not by a division line but by a structure such as a wall or a fence. In such a parking lot, the structure is detected instead of the division line in S3. For detection of a structure, the ultrasonic sensors 9A to 9L can be used instead of cameras.

In the above example, the division line included in the overhead image 46 is detected by performing the image recognition process on the overhead image 46 generated in S1, but the division line may be detected by performing the image recognition on the captured image captured by each camera of the front camera 6, the rear camera 7, and the side cameras 8A and 8B before providing the overhead view. Further, the division line may be detected by performing image recognition on the captured image in the middle of the process of providing the overhead view.

Subsequently, in S4, the CPU 31 determines whether there is a parking slot in which the vehicle can be parked around the vehicle (specifically, within the display range of the overhead image) based on the detection result of the division line in S3. Specifically, in a case where there is a space surrounded by a division line and having a size large enough to park the vehicle, and there is no obstacle such as another vehicle in the space, the space is identified as a parking slot in which the vehicle can be parked, and it is determined whether at least one such parking slot has been identified. When there is a plurality of parking slots where the vehicle can be parked, the plurality of corresponding parking slots is identified. The parking slot identified in S4 is a candidate for the parking target position in the subsequent parking assistance of the vehicle 2.

Note that the space surrounded by the division lines does not necessarily need to be a space surrounded by the division lines in all four directions, and for example, in a parking lot in which the front end line 52 and the rear end line 53 do not exist as illustrated in Fig. 7, a space sandwiched between the left and right side end lines 54 is identified as a parking slot. Whether there is an obstacle in the parking slot may be detected by the result of an image recognition by the camera or by using the ultrasonic sensors 9A to 9L.

In S4, it is determined whether the parking slot in which the vehicle can be parked is a parking slot for parallel parking or a parking slot for in-line parking. The above determination can be made from the angle at which the parking slot is disposed with respect to the passage 50. That is, when the angle at which the identified parking slot is disposed is substantially parallel to the passage, the parking slot is a parking slot in which in-line parking is performed, and when the angle is substantially perpendicular to the passage, the parking slot is a parking slot in which parallel parking is performed. In addition, parallel parking includes oblique parking in which parking is performed in an inclined manner in addition to a case where parking is performed perpendicularly to a passage. Therefore, as a result of detecting the angle at which the parking slot is disposed with respect to the passage 50, in a case where the angle at which the parking slot is disposed is neither parallel nor perpendicular to the passage 50, it is determined that the parking slot is a parking slot for oblique parking in which parking is performed in an inclined manner. Then, in a case where a parking slot for oblique parking is identified, the parking slot is not positioned perpendicularly or parallel to the boundary between the parking slot and the passage, and it is difficult to set the angle of the target parking space image based on the angle of the boundary. Therefore, the following process after S5 is not performed, and the target parking space image is displayed at the angle determined based on the angle of the division line defining the parking slot, for example, at the same angle as the left and right side end lines 54.

In a case where it is determined that there is at least one parking slot where the vehicle can be parked around the vehicle (S4: YES), the process proceeds to S5. On the other hand, in a case where it is determined that there is no parking slot where the vehicle can be parked around the vehicle (S4: No), the process returns to S3, and the image recognition process is continuously performed until the parking slot where the vehicle can be parked is detected.

In S5, the CPU 31 determines whether there is a division line (front end line 52) at the boundary between the parking slot identified in S4 and the passage through which the vehicle travels. At the stage where it is determined in S4 that there is a parking slot where the vehicle can be parked around the vehicle, the host vehicle travels in the passage 50 as illustrated in Figs. 6 to 8, and it can be assumed that there are parking slots (the number of parking slots may be one or more) on one side or both sides of the passage 50 where the host vehicle travels. Therefore, the following description will be given on the assumption that there are parking slots.

In a case where it is determined that there is a division line (front end line 52) at the boundary between the parking slot identified in S4 and the passage through which the vehicle travels (S5: YES), the process proceeds to S6. On the other hand, in a case where it is determined that there is no division line (front end line 52) at the boundary between the parking slot identified in S4 and the passage through which the vehicle travels (S5: NO), the process proceeds to S7.

In S6, the CPU 31 detects the angle of the front end line 52 at the boundary between the parking slot identified in S4 and the passage through which the vehicle travels as the angle of the boundary between the parking slot identified in S4 and the passage through which the vehicle travels based on the detection result of the division line in S3. For example, as illustrated in Fig. 9, in a case where there is the front end line 52 between the parking slot 51 and the passage 50 identified in S4, the angle β of the front end line 52 is detected from the relative angle with respect to the reference direction α with the current traveling direction of the vehicle 2 as the reference direction α. Note that the reference direction α may be, for example, the optical axis direction of the camera instead of the traveling direction of the vehicle 2.

As illustrated in Fig. 9, in a case where a plurality of parking slots is disposed in the same direction with respect to the passage 50, the boundaries between the parking slots in the same direction and the passage 50 are naturally the same straight line. Therefore, in a case where a plurality of parking slots is identified in the same direction with respect to the passage 50, the angles β of the front end lines 52 of the plurality of parking slots need to be the same. Therefore, in a case where a plurality of parking slots is disposed in the same direction with respect to the passage 50, the process of S6 does not calculate the angle of the front end line 52 for each of the plurality of parking slots, but calculates the angle by regarding the front end line 52 of each parking slot as one straight line. As a result, the angles β of the front end lines 52 of the parking slots in the same direction with respect to the passage 50, that is, the angles of the boundaries have a common value.

On the other hand, the front end line 52 of each parking slot in the same direction may not be regarded as one straight line, and the angle of the front end line 52 may be calculated for each parking slot, and then the average of the angles of the front end lines 52 of the parking slots in the same direction with respect to the passage 50 may be calculated, and the calculated average value may be set as the angle β of the front end line 52. Even in this case, the angles β of the front end lines 52 of the parking slots in the same direction with respect to the passage 50 have a common value. Thereafter, the process proceeds to S8.

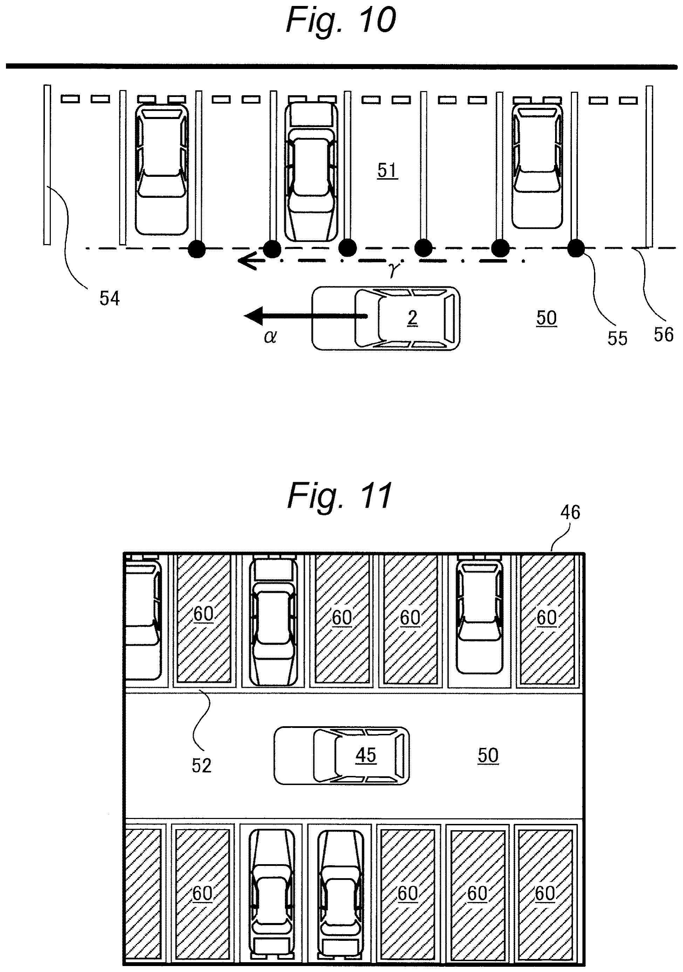

On the other hand, in S7, the CPU 31 calculates an approximate line that passes through as close as possible to an end portion (hereinafter, referred to as a front end point) close to the passage among the end portions of the side end lines 54 of the parking slots identified in S4 based on the detection result of the division lines in S3. Then, the angle of the approximate line is detected as the angle of the boundary between the parking slot identified in S4 and the passage through which the vehicle travels. For example, as illustrated in Fig. 10, in a case where there is no front end line between the parking slot 51 and the passage 50 identified in S4, an approximate line 56 passing as close as possible to the plurality of front end points 55 is first calculated, and then the angle γ of the approximate line 56 is detected by a relative angle with respect to the reference direction α with the current traveling direction of the vehicle 2 as the reference direction α. Note that the reference direction α may be, for example, the optical axis direction of the camera instead of the traveling direction of the vehicle 2.

In a case where a plurality of parking slots is disposed in the same direction with respect to the passage 50 as illustrated in Fig. 10, the boundaries between the parking slots in the same direction and the passage 50 are naturally the same straight line. Therefore, in a case where a plurality of parking slots is identified in the same direction with respect to the passage 50, the angles γ of the approximate lines 56 of the plurality of parking slots need to be the same. Therefore, in a case where a plurality of parking slots is disposed in the same direction with respect to the passage 50, the process of S7 does not calculate the approximate line 56 for each of the plurality of parking slots, but calculates only one approximate line passing as close as possible to the front end points 55 of all the parking slots in the same direction. As a result, the angles γ of the approximate lines 56 of the parking slots in the same direction with respect to the passage 50, that is, the angles of the boundaries have a common value.

On the other hand, instead of setting the approximate line of each parking slot in the same direction as one straight line, an approximate line passing through the right and left front end points 55 may be calculated for each parking slot, an angle of the approximate line may be further calculated, an average of the angles of the approximate lines of the parking slots in the same direction with respect to the passage 50 may be calculated, and the calculated average value may be set as the angle γ of the approximate line 56. Even in this case, the angles β of the approximate lines 56 of the parking slots in the same direction with respect to the passage 50 have a common value. Thereafter, the process proceeds to S8.

In S8, the CPU 31 determines an angle at which the target parking space image displayed for the parking slot is displayed based on the angle (β or γ) of the boundary between the parking slot and the passage calculated in S6 or S7. Here, the target parking space image is an image for indicating that the parking slot in which the vehicle identified in S4 can be parked is a candidate for a parking target position.

Further, in S9, the CPU 31 displays the target parking space image in a superimposed manner at the angle determined in S8 with respect to the parking slot where the vehicle identified in S4 can be parked in the overhead image 46 displayed in S2. In a case where the target parking space image has already been displayed and the position and the angle to be displayed have been corrected, the display content is updated.

Here, Fig. 11 is a diagram illustrating an example of the overhead image 46 displayed on the liquid crystal display 4. As illustrated in Fig. 11, in the overhead image 46, the target parking space image 60 is displayed for each parking slot where the vehicle can be parked. The target parking space image 60 has a rectangular shape corresponding to the size of the vehicle 2, and basically has a fixed shape regardless of the size of the parking slot. Then, in a case where the target parking space image 60 is displayed in the overhead image 46, the front end line 52 is disposed so that a side of the target parking space image 60, the side being close to the passage, coincides with the front end line 52. In addition, in a case where the target parking space image 60 is displayed in the parking slot without the front end line 52, the end portion away from the passage (the rear end line 53 may be used as long as the rear end line 53 is provided) among the end portions of the side end line 54 of the parking slot and the rear end of the target parking space image 60 are aligned in the front-rear direction. In addition, the direction of the target parking space image 60 is a direction intersecting the passage in the case of a parking slot for parallel parking, and a direction parallel to the passage in the case of a parking slot for in-line parking. Whether the parking slot in which the target parking space image 60 is to be disposed is a parking slot for parallel parking or a parking slot for in-line parking is determined in S4 described above. Thereafter, the angle of the target parking space image 60 is adjusted so that the angle X of the boundary calculated in S6 or S7 coincides with the angle X' of the side (in the case of parallel parking, it is a short side, and in the case of in-line parking, it is a long side) of the target parking space image 60 facing the boundary.

As a result, the angle of the target parking space image 60 displayed in the overhead image 46 is fixed to the angle of the boundary between the parking slot and the passage through which the vehicle travels. In addition, as described above, for the parking slots in the same direction with respect to the passage 50, the angles of the boundaries have a common value, so that the target parking space images 60 are displayed at the same angle for all the parking slots in the same direction as illustrated in Fig. 11.

Here, there is a known problem that, in a case where a division line is detected from a captured image captured by a camera, particularly, a division line at a position away from a vehicle is detected distortedly. Therefore, for example, when the target parking space image 60 is displayed in accordance with the angle of the division line (for example, the side end line 54) surrounding the parking slot for each parking slot, there is a problem that the target parking space image 60 is displayed at a different angle for each parking slot. On the other hand, in the present embodiment, for all the parking slots in the same direction, the target parking space images 60 can be displayed at the same angle, and the above problem can be solved. Furthermore, the boundary located in parallel with respect to the traveling direction of the vehicle is not likely to have the problem of the distortion even when detected by the camera. Therefore, by displaying the target parking space image 60 at an angle with the boundary as a reference, it is possible to display the target parking space image 60 fixed at a correct angle (in a case of parallel parking, it is perpendicular to the passage, and in a case of in-line parking, it is parallel to the passage) at all times. As a result, it is possible to prevent the angle of the target parking space image 60 disposed in the same parking slot from changing as the vehicle 2 travels.

As described above, in a case where the front end line 52 is present, the position where the target parking space image 60 is displayed in S9 is such that a side of the target parking space image 60, the side being close to the passage, coincides with the front end line 52. In addition, in a case where the target parking space image 60 is displayed in the parking slot without the front end line 52, the end portion away from the passage among the end portions of the side end lines 54 of the parking slot and the rear end of the target parking space image 60 are aligned in the front-rear direction. However, when the target parking space image 60 is displayed for a plurality of parking slots disposed side by side on one side of the passage in accordance with the above rule, the position of the front end line 52 and the position of the side end line 54 of each parking slot are recognized differently due to a lack of a white line of the parking slot due to deterioration, distortion of recognition, unevenness of the road, or the like, so that there is a problem that the positions of the target parking space images 60 disposed in accordance with the end portions of the front end line 52 and the side end line 54 are not aligned in the front-rear direction (the direction intersecting the passage) and are disposed separately. Therefore, in the present embodiment, the display position is adjusted so that the positions of the target parking space images 60 are aligned in the front-rear direction by the following process of S10 to S13.

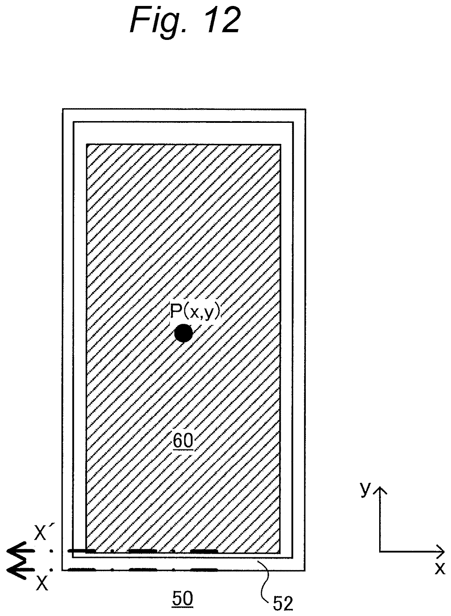

Next, in S10, the CPU 31 calculates the display position of the target parking space image 60 for the target parking space image 60 displayed in the overhead image 46. Specifically, as illustrated in Fig. 12, the coordinates of the center position P of the target parking space image 60 are calculated in the coordinate system set in the overhead image 46 to be displayed. The process of S10 is performed on all the target parking space images 60 displayed in the overhead image 46 at the present time.

Thereafter, in S11, the CPU 31 determines whether the display positions of the plurality of target parking space images 60 displayed for the parking slots in the same direction with respect to the passage are different in the front-rear direction. The front-rear direction is a direction intersecting the passage. That is, the coordinates of the center position P calculated in S10 are compared between the parking slots located in the same direction with respect to the passage, and it is determined whether the distances from the passage (or the route of the host vehicle, if available) to the center position P are different or the center positions P are on the same straight line. Then, for the parking slots in the same direction with respect to the passage, in a case where the distance from the passage to the center position P is different for each parking slot or the center positions P are not on the same straight line, it is determined that the display positions of the plurality of target parking space images 60 displayed for the parking slots in the same direction with respect to the passage are different in the front-rear direction. However, even when the distances are different or the coordinates of the center position P are not on the same straight line, if the differences are sufficiently small (for example, 1/10 or less of the length of the long side of the target parking space image 60), it is desirable to consider that the positions in the front-rear direction are not different.

In a case where it is determined that the display positions of the plurality of target parking space images 60 displayed for the parking slots in the same direction with respect to the passage are different in the front-rear direction (S11: YES), the process proceeds to S12. On the other hand, in a case where it is determined that the display positions of the plurality of target parking space images 60 displayed for the parking slots in the same direction with respect to the passage are not different in the front-rear direction (S11: NO), the process proceeds to S14. In a case where only one parking slot is identified in the same direction with respect to the passage, the process also proceeds to S14.

In S12, the CPU 31 calculates an average value or a median value of the positions of respective center positions P for the target parking space images 60 displayed for a plurality of parking slots in the same direction with respect to the passage in the front-rear direction (direction intersecting the passage). In a case where there are parking slots on both sides of the passage, an average value or a median value of the positions of the center positions P in the front-rear direction with respect to each direction is calculated. In S12, an average value or a median value of the distances from the boundary to the center positions P may be calculated.

Thereafter, in S13, for the positions in the front-rear direction of the target parking space images 60 displayed for the plurality of parking slots in the same direction with respect to the passage, the CPU 31 adjusts the positions of the center positions P in the front-rear direction to be the average value or the median value calculated in S12.

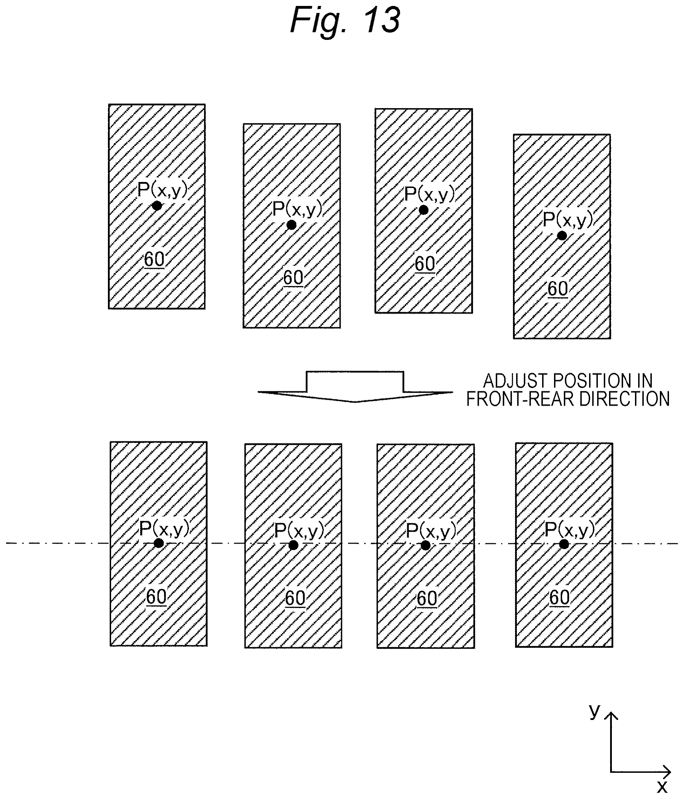

As a result, as illustrated in Fig. 13, the target parking space images 60 displayed in the parking slots in the same direction with respect to the passage are displayed with the position in the front-rear direction, that is, the position in the direction intersecting the passage, aligned. In Fig. 13, the y-axis of the orthogonal coordinate system is the front-rear direction.

As a result, when the target parking space images 60 are displayed in accordance with the end portions of the front end lines 52 or the side end lines 54 of the parking slots as described above, there is a problem that the target parking space images 60 are displayed at different positions in the front-rear direction for respective parking slots, but in the present embodiment, for all the parking slots in the same direction, the target parking space images 60 can be displayed at the same position in the front-rear direction, and the above problem can be solved. In addition, it is possible to prevent the position in the front-rear direction of the target parking space image 60 disposed in the same parking slot from changing as the vehicle 2 travels.

Then, the liquid crystal display 4 includes a touch panel as the operation unit 3, and the user can designate any parking target position at which the vehicle is desired to be parked from among the target parking space images 60 included in the overhead image 46 displayed on the liquid crystal display 4 as illustrated in Fig. 11. In S14, the CPU 31 determines whether the operation of designating the parking target position is performed.

In a case where it is determined that the operation to designate the parking target position has been performed (S14: YES), the process proceeds to S15. On the other hand, in a case where it is determined that the operation to designate the parking target position has not been performed (S14: NO), the process returns to S3. Thereafter, when a parking slot in which the vehicle can be newly parked is detected, a new target parking space image 60 is displayed on the parking slot in a superimposed manner. Note that, in addition to the target parking space image 60, a surrounding obstacle (for example, a parked vehicle) is displayed in the overhead image 46, and thus warning images for the obstacle may be displayed.

In S15, the CPU 31 starts vehicle control for parking the vehicle at the parking target position designated by the user in S14. First, the CPU 31 calculates a parking trajectory that is a traveling trajectory for parking the host vehicle from the current position of the vehicle to the designated parking target position. For example, the calculation of the parking trajectory in the case of performing parallel parking will be described as an example. First, the CPU 31 sets a backward movement start position 62 (that is, the position of the host vehicle where the host vehicle starts to move backward to perform parking) when the host vehicle is parked at the parking target position 61 designated by the user as illustrated in Fig. 14. The backward movement start position 62 is determined relative to the parking target position 61 in consideration of the vehicle length, the vehicle width, the minimum turning radius, and the like of the host vehicle.

Subsequently, the CPU 31 calculates a turning trajectory 63 from the backward movement start position 62 to the parking target position 61. Specifically, the turning trajectory 63 is a route in which the host vehicle can move to the parking target position 61 without contacting surrounding obstacles and turns at an optimum steering angle derived from the turning characteristic of the vehicle. For example, a traveling trajectory when the vehicle turns with the minimum turning radius is calculated as the turning trajectory 63. The turning trajectory 63 may be an arc or a clothoid curve, and may partially include a linear trajectory. Further, the CPU 31 calculates a preparation trajectory 64 from the current position of the host vehicle to the backward movement start position 62. Note that the preparation trajectory 64 may be a straight trajectory as illustrated in Fig. 14, or may include an arc or a clothoid curve depending on the positional relationship between the current position of the host vehicle and the backward movement start position 62. In addition, the CPU 31 also calculates the trajectory of steering wheel turn-back in a case where steering wheel turn-back is necessary to correct the vehicle azimuth to an appropriate azimuth (basically, an azimuth parallel to the side end line 54).

Thereafter, the CPU 31 starts parking assistance according to the calculated parking trajectory. Specifically, the current position of the host vehicle and the position of surrounding obstacles are detected as needed, and vehicle control such as steering, a driving source, and a brake is automatically performed so that the vehicle travels at a specified speed along the generated parking trajectory. In addition, in a case where a steering wheel turn-back is required to move to a parking slot, the shift position is automatically switched. The parking assistance is continuously performed until parking the vehicle at the parking target position is completed.

However, in the movement of the vehicle according to the parking trajectory, only the steering operation may be automatically performed, and the driving source and the brake may be controlled based on the manual operation. Alternatively, the movement of the vehicle may be performed by manual driving instead of automatic driving. In this case, as parking assistance, the parking trajectory is displayed on the liquid crystal display 4, and the timing of turning the steering wheel is guided by voice.

As described above in detail, according to the parking assistance device 1 and the computer program executed by the parking assistance device 1 according to the present embodiment, the captured image obtained by capturing the surroundings of the vehicle by the camera included in the vehicle is displayed on the liquid crystal display 4 (S2), and the target parking space image 60 indicating that the parking slot 51 in the captured image is a candidate for the parking target position is displayed in a case where the parking slot 51, which is the candidate for the parking target position at which the vehicle is parked, is detected (S9). On the other hand, the process of displaying the target parking space image 60 includes, in a case where the parking slot 51 for which the target parking space image 60 is displayed is on the side of the passage 50 through which the vehicle travels, detecting the angle of the boundary between the parking slot 51 and the passage 50 (S6, S7), determining an angle at which the target parking space image 60 displayed for the parking slot 51 is displayed based on the detected angle of the boundary (S8), and displaying the target parking space image 60 at the determined angle (S9). Therefore, in a case where the target parking space image 60 indicating that the parking slot 51 is a candidate for the parking target position is displayed on the captured image in a superimposed manner, it is possible to allow the user to visually recognize the target parking space image 60 without a sense of discomfort.

In addition, the process of displaying the target parking space image 60 includes, in a case where there is a plurality of parking slots 51 disposed side by side on one side or both sides of the passage 50 through which the vehicle 2 travels, displaying the plurality of target parking space images 60 displayed for the plurality of respective parking slots 51 in the same direction with respect to the passage 50 with the positions in the direction intersecting with the passage 50 aligned (S13), so that for all the parking slots in the same direction with respect to the passage, the target parking space images 60 can be displayed at the same position in the front-rear direction. As a result, it is possible to prevent the target parking space images from being displayed at different positions in the front-rear direction for respective parking slots.

Furthermore, the process of displaying the target parking space image 60 includes, for the plurality of target parking space images 60 displayed for the plurality of respective parking slots 51 in the same direction with respect to the passage 50, calculating the average value or the median value of the positions of the centers of the target parking space images 60 in the direction intersecting the passage 50 (S12), and adjusting the positions of the centers of the plurality of target parking space images 60 displayed for the plurality of respective parking slots 51 in the same direction with respect to the passage 50 to a position corresponding to the average value or the median value (S13), so that the positions of the plurality of target parking space images 60 in the direction intersecting the passage 50 are aligned and displayed. Therefore, for all the parking slots in the same direction with respect to the passage, the target parking space images 60 can be displayed at the same position in the front-rear direction. As a result, it is possible to prevent the target parking space images from being displayed at different positions in the front-rear direction for respective parking slots.

In addition, in a case where there is a division line (front end line 52) at the boundary between the parking slot 51 and the passage 50, the angle of the division line is detected as the angle of the boundary (S6), and in a case where there is no division line at the boundary between the parking slot 51 and the passage 50, the angle of the approximate line 56 passing through an end portion close to the passage among the end portions of the division line (side end line 54) that defines the parking slot 51 in the direction intersecting the passage is detected as the angle of the boundary (S7), so that it is possible to accurately calculate the boundary between the parking slot and the passage regardless of whether there is a division line that defines the parking slot between the parking slot and the passage.

Note that the present disclosure is not limited to the above embodiments, and various improvements and modifications can be made without departing from the gist of the present disclosure.

For example, in the present embodiment, as the vehicle surrounding image displayed on the liquid crystal display 4 when parking assistance is performed, an overhead image generated from captured images captured by the respective cameras of the front camera 6, the rear camera 7, and the side cameras 8A and 8B is displayed on the liquid crystal display 4. The vehicle surrounding image displayed on the liquid crystal display 4 may be a bird's-eye view image viewed obliquely downward instead of the overhead image. Furthermore, the captured image itself captured by the camera may be displayed without being processed.

Further, in the present embodiment, the target parking space image 60 indicating that a parking slot without an obstacle such as another vehicle among parking slots around the vehicle is a candidate for the parking target position is displayed. In addition to this, a vehicle image indicating the presence of another vehicle may be displayed in a superimposed manner on a parking slot in which another vehicle is parked. Note that the vehicle image is, for example, a model image of CG imitating the appearance of the vehicle. Here, in the conversion of the captured image captured by the camera into the overhead image, the captured image including the three-dimensional object is projected and pasted on a flat projection surface (ground surface) without being regarded as the three-dimensional object. Therefore, a position higher than the ground surface is projected farther than the actual position, and the three-dimensional object in the captured image is displayed with distortion or elongation with respect to the original shape. As a result, there is a problem that other vehicles parked in the parking slot are displayed in a largely distorted shape. Therefore, by displaying a vehicle image for a parking slot where another vehicle is parked, it is possible to expect an effect of enabling the user to clearly visually recognize that a parked vehicle is present at the position.

Then, in the case of displaying the vehicle image, the process similar to that in the case of displaying the target parking space image 60 is performed. That is, the parking assistance process described so far can be performed by replacing the target parking space image 60 with a vehicle image. Specifically, in a case where the parking slot for which the vehicle image is displayed is located on the side of the passage through which the vehicle travels, the angle of the boundary between the parking slot and the passage is detected (S6, S7), the angle at which the vehicle image displayed for the parking slot is displayed is determined based on the detected angle of the boundary (S8), and the vehicle image is displayed at the determined angle. The plurality of vehicle images displayed for the plurality of respective parking slots 51 in the same direction with respect to the passage 50 is displayed with the positions in the direction intersecting with the passage 50 aligned (S13). As a result, it is possible to allow the user to visually recognize the vehicle image without a sense of discomfort.

In addition, the execution order of each step of the parking assistance processing program illustrated in Fig. 3 is an example, and the execution order can be changed as appropriate. For example, the display of the target parking space image 60 in S9 may be executed after the position adjustment in the front-rear direction in S10 to S13. In this case, the position adjustment of the front-rear position in S10 to S13 is performed on an assumed display position before the target parking space image 60 is displayed. Furthermore, in a case where the target parking space image 60 has already been displayed and a new target parking space image 60 is additionally displayed, the position of the already displayed target parking space image 60 in the front-rear direction also changes at the same time as the display of the new target parking space image 60. In addition, some steps included in the parking assistance processing program can be omitted. For example, the process related to the position adjustment of the target parking space image 60 in the front-rear direction in S10 to S13 may be omitted.

Further, in the present embodiment, the process of the parking assistance processing program (Fig. 3) is configured to be executed by the driving assistance ECU 10 of the parking assistance device 1, but the execution subject can be appropriately changed. For example, the control unit of the liquid crystal display 4, the vehicle control ECU, the control unit of the navigation device, and other on-vehicle devices may be configured to execute the process.

### Supplementary note

The foregoing embodiments also disclose the following disclosure. In the following description, names and expressions of corresponding configurations in the embodiment and reference numerals used in the drawings are added in parentheses for reference. However, the constituent elements of each disclosure are not limited to this supplementary note.

### Disclosure A

The parking assistance device (1) according to Claim 1, wherein the target parking space image (60) is an image having a rectangular shape corresponding to the size of the vehicle (2), and the process of displaying the target parking space image includes performing display so that an angle of the boundary coincides with an angle of a side of the target parking space image facing the boundary.

According to this, in a case where the target parking space image 60 indicating that the parking slot is a candidate for the parking target position is displayed on the captured image in a superimposed manner, it is possible to prevent the angle of the target parking space image 60 disposed in the same parking slot from changing as the vehicle 2 travels.

### Disclosure B

The parking assistance device (1) according to Claim 1, wherein the parking assistance device displays a vehicle image indicating the presence of another vehicle in a parking slot (51) in which another vehicle is parked in the captured image (46) and the process of displaying the vehicle image includes detecting an angle of a boundary between the parking slot and the passage in a case where the parking slot for which the vehicle image is displayed is located on a side of the passage through which the vehicle travels, determining an angle at which the vehicle image displayed for the parking slot is displayed based on the detected angle of the boundary, and displaying the vehicle image at the determined angle.

According to this, in a case where the vehicle image indicating another vehicle parked in the parking slot is displayed on the captured image in a superimposed manner, it is possible to allow the user to visually recognize the vehicle image without a sense of discomfort.

### Disclosure C

The parking assistance device (1) according to Claim 1, wherein the parking assistance device detects an angle at which the parking slot (51) is disposed with respect to the passage (50), and in a case where the angle at which the parking slot is disposed is parallel or perpendicular to the passage, displays the target parking space image at an angle determined based on the angle of the boundary, and in a case where the angle at which the parking slot is disposed is neither parallel nor perpendicular to the passage, displays the target parking space image at an angle determined based on an angle of a division line defining the parking slot.

According to this, in a case where it is difficult to identify the boundary between the parking slot and the passage, the target parking space image can be displayed at the angle determined based on the angle of the division line defining the parking slot, for example, at the same angle as the left and right division lines.

## Claims

1. A parking assistance device (1) that displays, on a display device, a captured image obtained by an imaging device included in a vehicle (2) imaging surroundings of the vehicle (2), and
in a case where a parking slot (51) that is a candidate for a parking target position where the vehicle (2) is parked is detected, displays a target parking space image indicating that the parking slot (51) in the captured image is a candidate for the parking target position,
wherein a process of displaying the target parking space image includes
detecting, in a case where the parking slot (51) for which the target parking space image is displayed is located on a side of a passage (50) through which the vehicle (2) travels, an angle of a boundary between the parking slot (51) and the passage (50),
determining an angle at which the target parking space image displayed for the parking slot (51) is displayed based on the detected angle of the boundary, and
displaying the target parking space image at the determined angle.

2. The parking assistance device (1) according to Claim 1,
wherein the process of displaying the target parking space image includes
displaying, in a case where a plurality of the parking slots (51) is disposed side by side on one side or both sides of a passage (50) through which the vehicle (2) travels, a plurality of the target parking space images displayed for the plurality of parking slots (51) in a same direction with respect to the passage (50) with positions in a direction intersecting the passage (50) aligned.

3. The parking assistance device (1) according to Claim 2,
wherein the process of displaying the target parking space image includes
calculating, for the plurality of the target parking space images displayed for the plurality of parking slots (51) in a same direction with respect to the passage (50), an average value or a median value of positions of centers of the target parking space images in a direction intersecting the passage (50), and
displaying the plurality of target parking space images with positions in a direction intersecting the passage (50) aligned by adjusting positions of centers of the plurality of the target parking space images displayed for the plurality of respective parking slots (51) in a same direction with respect to the passage (50) to a position corresponding to the average value or the median value.

4. The parking assistance device (1) according to Claim 1,
wherein in a case where there is a division line at a boundary between the parking slot (51) and the passage (50), the parking assistance device (1) detects an angle of the division line as an angle of the boundary, and
in a case where there is no division line at the boundary between the parking slot (51) and the passage (50), the parking assistance device (1) detects, as the angle of the boundary, an angle of an approximate line (56) passing through an end portion close to the passage (50) among end portions of the division line that defines the parking slot (51) in a direction intersecting the passage (50).
